# EUROPÄISCHE PATENTSCHRIFT

(11) **EP 0 875 023 B1**
(45) Veröffentlichungstag und Bekanntmachung des Hinweises auf die Patenterteilung: **08.09.1999**
(21) Anmeldenummer: 97906801.2
(22) Anmeldetag: 16.01.1997
(51) Int. Cl.: G05B 19/418, G05B 19/05

(54) **AUTOMATISIERUNGSGERÄT**
AUTOMATION DEVICE
APPAREIL D'AUTOMATISATION

(30) Priorität: 17.01.1996 DE 29600609 U; 19.12.1996 DE 29622133 U
(43) Veröffentlichungstag der Anmeldung: 04.11.1998
(73) Patentinhaber: SIEMENS AKTIENGESELLSCHAFT, 80333 München (DE)
(72) Erfinder: STRIPF, Wolfgang, D-76187 Karlsruhe (DE); WENDEL, Volker, D-76767 Hagenbach (DE)
(86) Internationale Anmeldenummer: DE9700068
(87) Internationale Veröffentlichungsnummer: WO9726587

(56) Entgegenhaltungen:
- EP-A- 0 667 693
- US-A- 5 297 257
- 1995 IEEE INTERNATIONAL CONFERENCE ON SYSTEMS, MAN AND CYBERNETICS, VANCOUVER, OCT. 22 - 25, 1995, Bd. 1, 22.Oktober 1995, INSTITUTE OF ELECTRICAL AND ELECTRONICS ENGINEERS, Seiten 964-969, XP000586326 GAINES B R ET AL: "MEDIATOR: AN INTELLIGENT INFORMATION SYSTEM SUPPORTING THE VIRTUAL MANUFACTURING ENTERPRISE"
- DATABASE INSPEC INSTITUTE OF ELECTRICAL ENGINEERS, STEVENAGE, GB Inspec No. 5028860, VAN HOFF A: "Java and Internet programming" XP002032731 & DR. DOBB'S JOURNAL, AUG. 1995, USA, Bd. 20, Nr. 8, ISSN 1044-789X, Seiten 56, 58, 60-61, 101 - 102,

## Beschreibung

Die Erfindung betrifft ein Automatisierungsgerät oder ein intelligentes Feldgerät gemäß dem Oberbegriff des Anspruchs 1. Ferner betrifft die Erfindung ein Programmiergerät für einen global verteilten Automatisierungsverbund.

Ein Automatisierungsgerät mit den Merkmalen des Oberbegriffs des Anspruchs 1 ist aus dem Siemens-Katalog ST 70, Ausgabe 1995, bekannt. Ein Anwender erstellt mit einem Programmiergerät ein Programm zur Steuerung eines technischen Prozesses, das Software-Funktionsbausteine, z. B. in Form von Organisationsbausteinen, Programmbausteinen und Instanzdatenbausteinen, umfaßt. Das Automatisierungsgerät ist mit dem Programmiergerät über ein Bussystem verbunden, über welches das Programmiergerät das Steuerprogramm in das Automatisierungsgerät überträgt. Ferner ist ein Bedien- und Beobachtungsgerät an das Bussystem anschließbar, das zur Prozeßführung vorgesehen ist und welches die Darstellung von mehrere Bildobjekte umfassenden Prozeßbildern ermöglicht.

Häufig ist es erforderlich, daß Software-Funktionsbausteine eines Steuerprogramms von einem Automatisierungsgerät eines Fertigungsstandortes oder aus einem Software-Pool dieses Fertigungsstandortes in ein Automatisierungsgerät eines anderen Fertigungsstandortes zu übertragen sind. Insbesondere wenn die Fertigungsstandorte sehr weit voneinander entfernt sind, z. B. wegen einer Globalisierung von Fertigungsaktivitäten, werden diese Software-Funktionsbausteine über das globale Netzwerk "INTERNET" übertragen. Dazu sind Server mit geeigneten Kommunikationsschnittstellen notwendig, die einerseits das INTERNET-Kommunikationsprotokoll und andererseits das Kommunikationsprotokoll der Automatisierungsgeräte ermöglichen. Aufgrund dieser unterschiedlichen Protokolle und der Architektur der Automatisierungsgeräte ist eine Einbindung der Software-Funktionsbausteine zur Laufzeit des Steuerprogramms nicht möglich, insbesondere dann nicht, wenn Automatisierungsgeräte unterschiedlicher Hersteller mit diesen Software-Funktionsbausteinen zu versorgen sind.

US-A-5 297 257 beschreibt ein Netzwerk mit mehreren Knoten, denen ausführbare Teile eines Steuerprogramms für einen verteilten Prozeß zuführbar sind.

1995 IEEE International CONFERENCE ON SYSTEMS, MAN AND CYBERNETICS, VANCOUVER, OCT. 22-25, 1995, vol. 1, 22 October 1995, INSTITUTE OF ELECTRICAL AND ELECTRONIC ENGINEERS, Seiten 964 - 969, GAINES B.R. et al: "MEDIATOR: AN INTELLIGENT INFORMATION SYSTEM SUPPORTING THE VIRTUAL MANUFACTURING ENTERPRISE", offenbart ein Informations-Management-System mit einer Prozeßarchitektur in Form eines Netzwerkes, in welcher verschiedene Benutzer synchron oder asynchron miteinander arbeiten können an Prozessen, welche irgendwo in dem Netzwerk ablaufen. Unterschiedliche Kommunikationsschnittstellen und unterschiedliche Kommunikationsprotokolle werden dabei unterstützt.

Der vorliegenden Erfindung liegt die Aufgabe zugrunde, ein Gerät in Form eines Automatisierungsgerätes oder intelligenten Feldgerätes der eingangs genannten Art zu schaffen, welches für einen Einsatz in einem global verteilten Automatisierungsverbund geeignet ist.
Darüber hinaus ist ein Programmiergerät für einen global verteilten Automatisierungsverbund anzugeben.

Diese Aufgabe wird im Hinblick auf das Gerät durch ein Automatisierungsgerät oder intelligentes Feldgerät der eingangs genannten Art mit den im kennzeichnenden Teil des Anspruchs 1 angegebenen, im Hinblick auf ein Programmiergerät durch die in den Merkmalen des Anspruchs 5 angegebenen Maßnahmen gelöst.

Vorteilhafte Ausgestaltungen der Erfindung ergeben sich aus den Unteransprüchen.

Anhand der Zeichnung, in der ein Ausführungsbeispiel der Erfindung dargestellt ist, werden nachfolgend die Erfindung, deren Ausgestaltungen und Vorteile näher erläutert.

Es zeigen
- Figur 1: ein universelles, verteiltes Automatisierungs- und Management-Engineering- und Informationssystem in schematischer Darstellung,
- Figur 2: ein Programmübersetzungs-Strukturbild und
- Figuren 3 und 4: Software-Funktionsbaustein-Ablaufsysteme (PLC-Object-Engine-Systeme).

Zwei Fertigungsstandorte 1 und 2 eines global verteilten Automatisierungsverbundes sind über ein an sich bekanntes globales Netzwerk "INTERNET" 3 miteinander verbunden, wobei geeignete Einrichtungen 4, 5 vorgesehen sind, die verhindern, daß Unberechtigte Daten in die datenverarbeitenden Komponenten der Fertigungsstandorte 1, 2 übertragen. Die Fertigungsstandorte 1, 2 umfassen mehrere jeweils mit einer INTERNET-Kommunikationsschnittstelle versehene Geräte in Form von Automatisierungsgeräten 6, Programmiergeräten 7, Bedien- und Beobachtungsgeräten 8 und Workstations 9. Diese INTERNET-Kommunikationsschnittstellen ermöglichen eine TCP/IP-Protokoll-Kommunikation der Geräte untereinander. Es ist eine wesentliche Anforderung an ein Automatisierungsgerät, das während eines Steuerbetriebs ein aus mehreren Software-Funktionsbausteinen gebildetes Steuerprogramm zyklisch und/oder interruptgesteuert bearbeitet, daß diese Software-Funktionsbausteine ladbar und zur Laufzeit des Steuerprogramms in dieses einbindbar ausgebildet sind. Damit diese Anforderung erfüllt ist und die Software-Funktionsbausteine über das INTERNET und die INTERNET-Kommunikationsschnittstelle direkt in ein Automatisierungsgerät ladbar und zur Laufzeit des Steuerprogramms in dieses einbindbar sind, sind die Software-Funktionsbausteine objektorientiert ausgebildet. Die Software-Funktionsbausteine sind über das INTERNET dynamisch ladbar und erweiterbar, und das Automatisierungsgerät ist mit einer Software-Funktionsbaustein-Ablaufsteuerung (PLC-Object-Engine-System) versehen, die diese Software-Funktionsbausteine in das Steuerprogramm einbindet und während des Steuerbetriebs bearbeitet.
Eine Programmiersprache, die einen objektorientierten Code aus einer Quellsprache erzeugt und für einen Einsatz im INTERNET vorgesehen ist, ist aus dem Buch "Java!", Tim Ritchey, published 1995 by New Riders Publishing, bekannt. Dort ist eine Quellsprache "JAVA C" beschrieben, aus der ein objektorientierter Java-Bytecode erzeugbar ist. Weitere vorteilhafte Eigenschaften dieses Sprachmittels sind insbesondere die Portabilität des Codes sowie die Mechanismen zur Fehlerbehandlung. Durch die Portabilität des Codes wird sichergestellt, daß ein Automatisierungsgerät mit einer Ablaufsteuerung in Form eines Java-Bytecode-Interpreters 10 unabhängig von einer Prozessor-Hardware-Architektur 11 des Automatisierungsgerätes (herstellerunabhängig) die dem Automatisierungsgerät über das INTERNET zugeführten Java-Funktionsbausteine bearbeiten kann. Aus Gründen der Performance ist es allerdings vorteilhaft, das Automatisierungsgerät mit einem Java-Prozessor 12 zu versehen, der den Java-Code direkt verarbeitet.

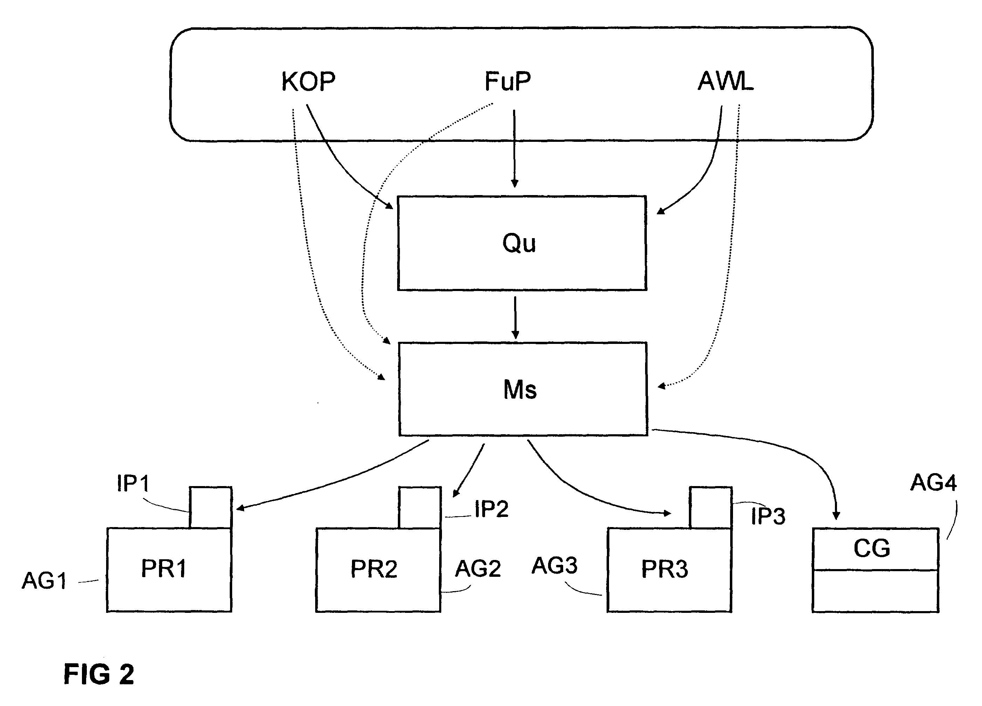

Die Portabilität eines objektorientierten Codes wird in Figur 2 verdeutlicht, in der ein Programmübersetzungs-Strukturbild dargestellt ist.
Ein Anwender erstellt mit einem Programmiergerät nach Maßgabe einer zu lösenden Steueraufgabe ein Steuerprogramm in Form eines Kontaktplanes KOP, eines Funktionsplans FuP, einer Anweisungsliste AWL oder in einer sonstigen geeigneten, z. B. in der Norm IEC 1131 beschriebenen, Form. Das Programmiergerät übersetzt auf Anwenderebene das Steuerprogramm in eine Quellsprache Qu, z. B. in die Quellsprache "JAVA C", oder direkt (in der Figur mit unterbrochenen Linien dargestellt) in eine objektorientierte Maschinensprache Ms, z. B. in den Java-Bytecode, die in Automatisierungsgeräte AG1, AG2, AG3, AG4 unterschiedlicher Architektur geladen wird. Auf Anwenderebene ist zur Erstellung der Maschinencodes nur ein Compiler für alle Automatisierungsgeräte erforderlich. Es ist angenommen, daß das Automatisierungsgerät AG4 einen Code-Generator G für die Verarbeitung der Maschinensprache Ms aufweist, wodurch dieses Automatisierungsgerät AG4 den Code direkt verarbeiten kann. Ferner ist angenommen, daß die Automatisierungsgeräte AG1, AG2, AG3 nicht mit einem derartigen Code-Generator versehen sind, sondern unterschiedliche Prozessoren PR1, PR2, PR3 umfassen. Damit die Automatisierungsgeräte AG1, AG2, AG3 den Code MS verarbeiten können, sind diese Automatisierungsgeräte jeweils mit einem Code-Interpreter IP1, IP2, IP3 versehen. Diese Interpreter IP1, IP2, IP3 erzeugen während der Laufzeit des Steuerprogramms jeweils einen durch die Prozessoren PR1, PR2, PR3 interpretierbaren Code.

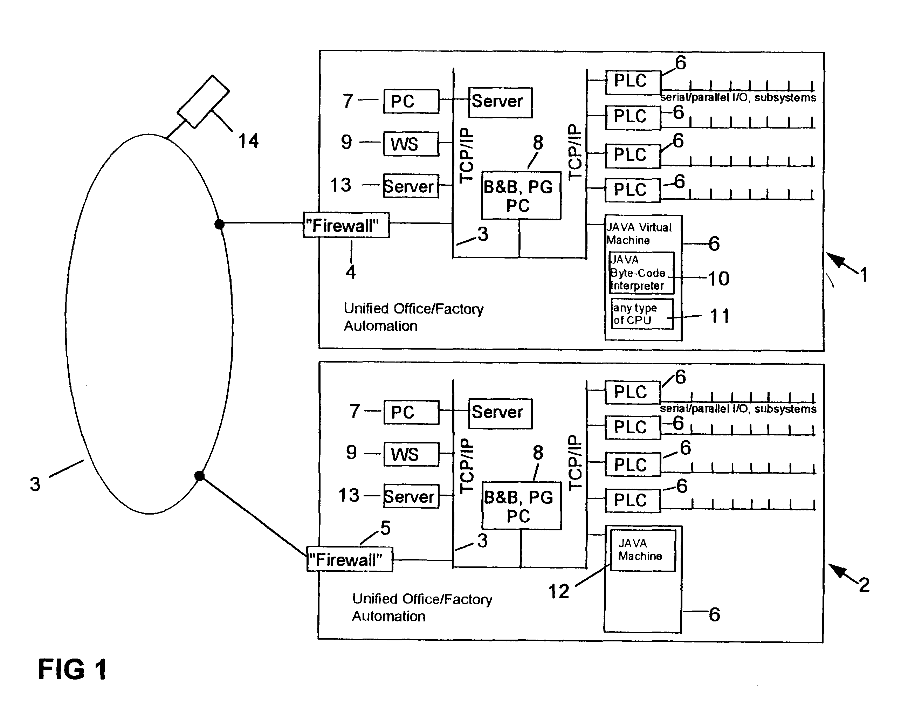

Die Programmierung der objektorientierten Software-Funktionsbausteine erfolgt durch die jeweiligen Programmiergeräte 7 (Figur 1) der Fertigungsstandorte 1, 2 oder durch ein ebenfalls an das INTERNET angeschlossenes Programmiergerät 14. Neben den Bedien- und Beobachtungsgeräten 8 und den Workstations 9 sind diese Programmiergeräte 8, 14 Bestandteile des Management-Engineering-Systems. Die Programmiergeräte führen diese Softwarebausteine den entsprechenden Automatisierungsgeräten über die jeweilige INTERNET-Kommunikationsschnittstelle und das INTERNET zu. Für den Fall, daß z. B. Bausteine geändert werden müssen, überträgt zunächst das Automatisierungsgerät 6 oder ein Server 13 einem der Programmiergeräte 7 den entsprechenden Software-Funktionsbaustein über das INTERNET. Schließlich ergänzt bzw. modifiziert das Programmiergerät 7 diesen Baustein und kann ihn wieder in eines der Automatisierungsgeräte übertragen. Das Programmiergerät ist ferner mit einem Software-Funktionsbaustein-Ablaufsystem (PLC-Object-Engine-System; Bos, ExE, Wd, IO) versehen, das zur Simulation des Steuerprogramms vorgesehen ist.

Die Prozeßbedienung und Prozeßführung der zu steuernden Prozesse in den Fertigungsstandorten 1, 2 erfolgt durch ebenfalls an das INTERNET anschließbare und am INTERNET betreibbare Bedien- und Beobachtungsgeräte 8. Ein Bedien- und Beobachtungsgerät 8, z. B. das Bedien- und Beobachtungsgerät 8 des Fertigungsstandortes 1, erzeugt ein Bedien- und Beobachtungs-Softwarebausteine umfassendes Bedien- und Beobachtungsprogramm zur Erstellung und Darstellung eines mehrere Bildobjekte umfassenden Prozeßbildes, wobei die Bildobjekte zu Software-Funktionsbausteinen des Steuerprogramms in Beziehung (in Wechselwirkung) stehen. Die Bedien- und Beobachtungs-Softwarebausteine sind objektorientiert ausgebildet und direkt über das INTERNET übertragbar. Es ist selbstverständlich möglich, das Prozeßbild auf dem Programmiergerät 7 zu erstellen und zur Prozeßführung über das INTERNET dem Bedien- und Beobachtungsgerät 8 zuzuführen.

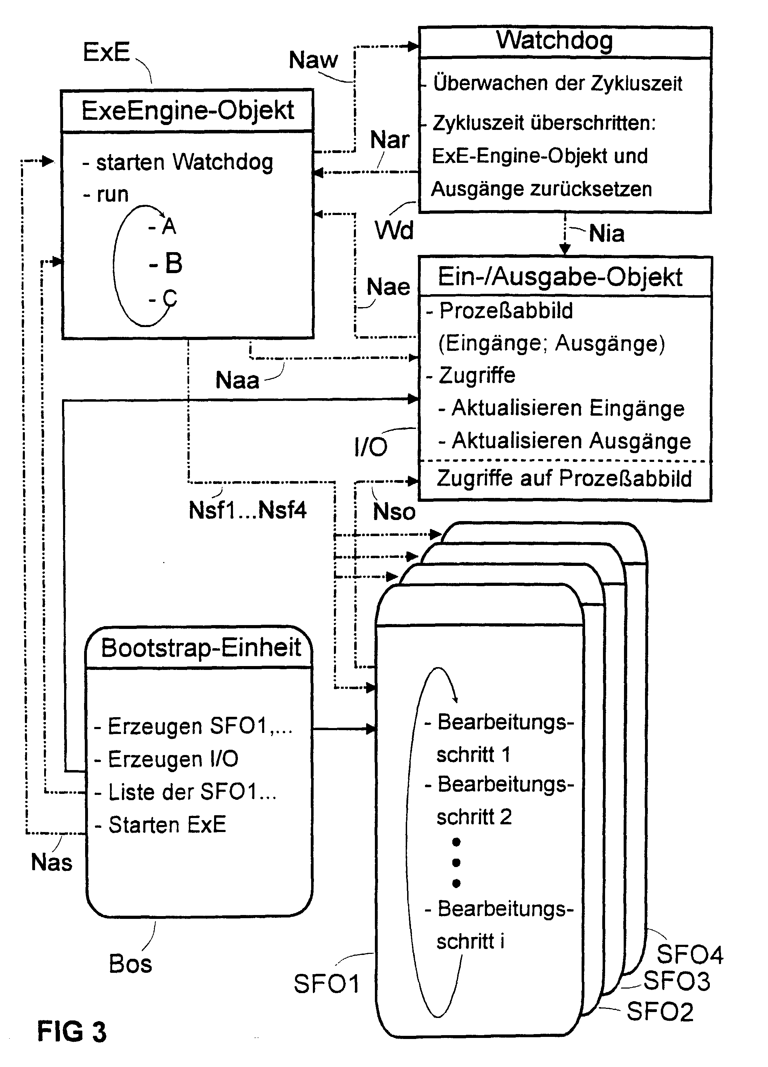

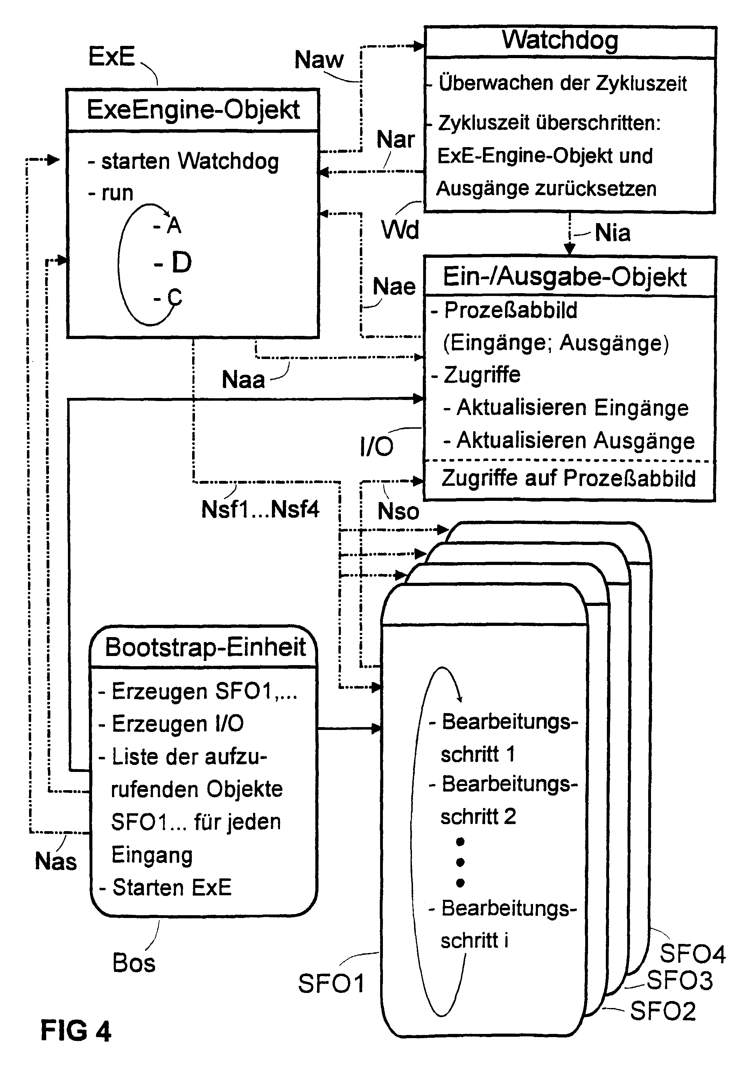

Um in Automatisierungssystemen hohen Ausbaugrades die Anzahl der in ein Automatisierungsgerät eingebauten Ein- und Ausgabekomponenten zu verringern, werden dezentrale Subsysteme, z. B. in Form von intelligenten Feldgeräten, eingesetzt. Das verteilte Automatisierungs- und Management-Engineering-System weist ein hier nicht dargestelltes intelligentes Feldgerät auf, welchem mindestens ein Software-Funktionsbaustein eines Steuerprogramms zuführbar ist, welches das Feldgerät während eines Steuerbetriebs zyklisch und/oder interruptgesteuert bearbeitet, wobei der Software-Funktionsbaustein ladbar und zur Laufzeit des Steuerprogramms in dieses einbindbar ausgebildet ist. Die Software-Funktionsbausteine sind objektorientiert ausgebildet und über das INTERNET und eine INTERNET-Kommunikationsschnittstelle des Feldgerätes in dieses ladbar, wobei das Feldgerät ein Software-Funktionsbaustein-Ablaufsystem (PLC-Object-Engine-System; Bos, ExE, Wd, IO) zur Einbindung des Software-Funktionsbausteins SF01, SF04 und Bearbeitung des Steuerprogramms aufweist. Im folgenden wird auf Figur 3 und 4 verwiesen, in denen ein Software-Funktionsbaustein-Ablaufsystem (PLC-Object-Engine-System) eines Automatisierungsgerätes und/oder eines intelligenten Feldgerätes und/oder eines Programmiergerätes (zur Simulation eines Steuerprogramms) dargestellt ist. Es ist zunächst angenommen, daß ein Steuerprogramm zyklisch zu bearbeiten ist (Figur 3), was bedeutet, daß unabhängig von den Signalzuständen von Prozeßein- und -ausgängen eines zu steuernden technischen Prozesses z. B. die CPU eines Automatisierungsgerätes zyklisch
a. die Signalzustände der Prozeßeingänge abfragt und in einem Prozeßabbild der Eingänge hinterlegt,
b. entsprechend den Vorgaben des zu bearbeitenden Steuerprogramms dieses schrittweise abarbeitet und
c. die errechneten Signalzustände in einem Prozeßabbild der Ausgänge hinterlegt, wobei diese Signalzustände von dort zu den Prozeßausgängen gelangen.

Wesentliche Bestandteile des Software-Funktionsbaustein-Ablaufsystems sind objektorientiert programmierte Einheiten in Form eines Bootstraps Bos, eines Ein-/Ausgabe-Moduls IO, eines Exe-Engine-Objekts ExE und eines Watchdogs Wd. Der Watchdog Wd braucht selbstverständlich nicht als Softwaremodul ausgebildet sein, sondern kann hardwaremäßig verwirklicht werden. In einem praktischen Ausführungsbeispiel der Erfindung sind die Einheiten Exe-Engine-Objekt ExE und Watchdog Wd sogenannte ,,threads". Die Funktions- und Wirkungsweise eines ,,threads" ist aus der Druckschrift "Supporting Microsoft Windows 95, Student Workbook", 07/95, der Fa. Microsoft bekannt und braucht daher nicht näher erläutert zu werden. In der Bootstrap-Einheit Bos sind eine Klasse von Software-Funktionsbausteinen und eine Klasse von Ein-/Ausgabe-Modulen hinterlegt. Diese Klassen werden z. B. von einem Anwender entsprechend den Vorgaben einer zu lösenden Steuerungsaufgabe auf einem Programmiergerät erstellt und z. B. in ein Automatisierungsgerät oder in ein Feldgerät übertragen. Die Bootstrap-Einheit Bos erzeugt vor Beginn des Steuerbetriebes aus der Klasse Software-Funktionsbausteine Software-Funktionsbaustein-Objekte und aus der Klasse Ein-/Ausgabe-Module Ein-/Ausgabe-Modul-Objekte. Im vorliegenden Beispiel sind lediglich vier Software-Funktionsbaustein-Objekte SFO1 ... SFO4 und ein Ein-/Ausgabe-Modul-Objekt IO dargestellt, in welchem ein Prozeßabbild von Ein- und Ausgängen hinterlegt ist und welchem Signalzustände von Prozeßeingängen des technischen Prozesses zuführbar sind und durch welches Signalzustände Prozeßausgängen dieses technischen Prozesses zuführbar sind. Ferner führt die Bootstrap-Einheit Bos zu Beginn des Steuerbetriebs dem Exe-Engine-Objekt ExE eine Liste der zu bearbeitenden Software-Funktionsbaustein-Objekte SFO1 ... SFO4 zu. Zu Beginn des Steuerbetriebes überträgt die Bootstrap-Einheit Bos eine Nachricht Nas (Methodenaufruf), wodurch das Exe-Engine-Objekt ExE gestartet wird. In einem ersten Bearbeitungsschritt führt das Exe-Engine-Objekt ExE dem Watchdog Wd eine Nachricht Naw zu, was bewirkt, daß der Watchdog Wd die Zykluszeit des Exe-Engine-Objekts ExE überwacht. Für den Fall, daß das Exe-Engine-Objekt ExE die vorgesehene Zykluszeit überschreitet, setzt der Watchdog Wd das Exe-Engine-Objekt ExE zurück, indem der Watchdog Wd dem Exe-Engine-Objekt ExE eine Nachricht Nar überträgt. Ferner setzt der Watchdog Wd im Falle der Zykluszeitüberschreitung die Ausgänge des Prozeßabbildes und die Prozeßausgänge zurück, wobei der Watchdog Wd dazu dem Ein-/Ausgabe-Modul-Objekt IO eine Nachricht Nia zuführt. Nachdem das Exe-Engine-Objekt ExE den Watchdog Wd gestartet hat, nimmt das Exe-Engine-Objekt ExE den Steuerbetrieb auf und führt zunächst einen Bearbeitungszyklus aus, welcher die Schritte umfaßt:
A) Aktualisieren der Eingänge des Prozeßabbildes, indem das Exe-Engine-Objekt ExE die Eingangssignalzustände des Prozeßabbildes aus dem Ein-/Ausgabe-Modul-Objekt IO ausliest, wobei die Signalzustände durch einen Methodenaufruf Nae zwischen den Objekten ausgetauscht werden,
B) Bearbeiten jeweils eines Bearbeitungsschrittes der Software-Funktionsbaustein-Objekte SFO1 ... SFO4, wobei das Exe-Engine-Objekt ExE entsprechende Methodenaufrufe NSF1 ... NSF4 den Software-Funktionsbaustein-Objekten SFO1 ... SFO4 zuführt, die Software-Funktionsbaustein-Objekte SFO1 ... SFO4 über Methodenaufrufe Nso auf das Prozeßabbild des Ein-/Ausgabe-Modul-Objekts IO zugreifen, und schließlich
C) Aktualisieren der Ausgänge des Prozeßabbildes, indem das Exe-Engine-Objekt ExE die Ausgänge des Prozeßabbildes im Ein-/Ausgabe-Modul-Objekt IO einschreibt, wobei wiederum die Signalzustände durch einen Methodenaufruf Naa zwischen den Objekten ausgetauscht werden.

Das Ein-/Ausgabe-Modul-Objekt IO versorgt über geeignete Schnittstellen die Prozeßausgänge des zu steuernden technischen Prozesses und - wie beschrieben - die Software-Funktionsbaustein-Objekte SFO1 ... SFO4 mit den Ein- und Ausgangssignalzuständen des Prozeßabbildes.

Es wird nun der Fall angenommen, daß ein Steuerprogramm interruptgesteuert zu bearbeiten ist (Figur 4), was bedeutet, daß im Falle von Signalzustandsänderungen an einem der Prozeßeingänge eines zu steuernden technischen Prozesses unverzüglich geeignete Steuermaßnahmen zu ergreifen sind. Die in den Figuren 3 und 4 gleichen Teile sind mit gleichen Bezugszeichen versehen. Im folgenden werden nur die Unterschiede zu der zyklischen Bearbeitung des Steuerprogramms beschrieben (Figur 3). Im Falle der interruptgesteuerten Bearbeitung des Steuerprogramms überträgt die Bootstrap-Einheit Bos zu Beginn des Steuerbetriebs dem Exe-Engine-Objekt ExE nicht wie im Falle einer zyklischen Bearbeitung die Liste der zu bearbeitenden Software-Funktionsbaustein-Objekte, sondern eine Liste von "aufzurufenden" Software-Funktionsbaustein-Objekten pro Prozeßeingang. Das bedeutet, jedem Prozeßeingang ist ein Software-Funktionsbaustein-Objekt zugeordnet und bei einer Signalzustandsänderung an einem Prozeßeingang ist das diesem Eingang zugeordnete Software-Funktionsbaustein-Objekt zu starten. Im Unterschied zur zyklischen Bearbeitung im Hinblick auf den Bearbeitungsschritt B) führt das Exe-Engine-Objekt ExE während des Bearbeitungszyklus einen Schritt D) aus, welcher umfaßt:
D) Feststellen von Signalzustandsänderungen an den Eingängen des Prozeßabbildes und Bearbeiten der diesen Eingängen zugeordneten Software-Funktionsbaustein-Objekte.

Die in einem Unternehmen anfallenden weiteren Aufgaben wie Materialwirtschaft, Fertigungsplanung, Personaleinsatz usw. sind unter dem Oberbegriff Management-Informationssysteme zusammengefaßt und werden durch ebenfalls an das INTERNET angeschlossene Workstations oder Server bearbeitet. Sie bedienen sich großer Datenbanken, die persistente objektorientierte Software-Funktionsbausteine als Repräsentanten von Teilprozessen halten und bei Bedarf zum Ablauf bringen.

Die Software-Funktionsbausteine des Automatisierungsgerätes sowie des intelligenten Feldgerätes sind im Hinblick auf Entwurf, Projektierung, Programmierung von Automatisierungsaufgaben und Kommunikation zwischen den Komponenten des Automatisierungsverbundes kompatibel zu denen im Management-Engineering-System und zu denen im Management-Engineering- und Informationssystem. Aufgabenerweiterungen bzw. Aufgabenverlagerungen sind dadurch übersichtlich und einfacher als bisher zu bewerkstelligen.

Durch die Erfindung wird ein durchgängiges Automatisierungssystem geschaffen, das einen weltweiten Betrieb ermöglicht. Die aus dem Stand der Technik bekannte weitgehende Entkopplung von Automatisierungsgeräten und Standard-Computern wird vermieden. Es wird die Möglichkeit eröffnet, sämtliche Unternehmenselemente wie Prozesse, Ressourcen und Organisationen objektorientiert zu modellieren. Die Implementierung von Software aus diesen Objektmodellen heraus erfolgt über eine einheitliche Werkzeugkette im Rahmen einer durchgängigen Architektur. In der Prozeßoptimierungs- bzw. -änderungsphase sind durch eine Verschiebung von Objekten einfache Softwareanpassungen möglich. Ferner wird eine weltweite, flexible und verteilte Fertigung mit zentraler Planung, Simulation und Optimierung ermöglicht.

## Patentansprüche

1. Automatisierungsgerät oder intelligentes Feldgerät, welchem Software-Funktionsbausteine eines Steuerprogramms zuführbar sind, welches das Gerät während eines Steuerbetriebs zyklisch und/oder interruptgesteuert bearbeitet, wobei die Software-Funktionsbausteine ladbar und zur Laufzeit des Steuerprogramms in dieses einbindbar ausgebildet sind, **dadurch gekennzeichnet,**
- daß die Software-Funktionsbausteine (SF01, ..., SF04) objektorientiert ausgebildet und über ein globales Netzwerk und eine Netzwerk-Kommunikationsschnittstelle des Gerätes in dieses ladbar sind und
- daß das Gerät ein Software-Funktionsbaustein-Ablaufsystem (PLC-Object-Engine-System; Bos, ExE, Wd, IO) aufweist, welches ein Exe-Engine-Objekt (ExE), einen Watchdog (Wd), einen Bootstrap (Bos) und ein Ein-/Ausgabe-Modul-Objekt (IO) umfaßt, in welchem ein Prozeßabbild von Ein- und Ausgängen hinterlegbar ist und welchem Signalzustände von Prozeßeingängen zuführbar sind und durch welches Signalzustände Prozeßausgängen zuführbar sind,
wobei
- der Bootstrap (Bos) vor Beginn des Steuerbetriebes die Software-Funktionsbaustein-Objekte (SF01, ..., SF04) und das Ein-/Ausgabe-Modul-Objekt (IO) erzeugt sowie dem Exe-Engine-Objekt (ExE) zuführt:
- für den Fall einer zyklischen Bearbeitung des Steuerprogramms eine Liste der zu bearbeitenden Software-Funktionsbaustein-Objekte (SFO1, ..., SFO4),
- für den Fall einer interruptgesteuerten Bearbeitung des Steuerprogramms eine Liste der zu bearbeitenden Software-Funktionsbaustein-Objekte (SFO1, ..., SFO4) für jeden Prozeßeingang,
und wobei
- der Bootstrap (Bos) zu Beginn des Steuerbetriebes das Exe-Engine-Objekt (ExE) startet, welches zunächst den Watchdog (Wd) startet, welcher beim Überschreiten der Zykluszeit das Exe-Engine-Objekt (ExE) zurücksetzt, und anschließend zyklisch
- die Eingänge des Prozeßabbildes aktualisiert,
- für den Fall einer zyklischen Bearbeitung des Steuerprogramms jeweils einen Bearbeitungsschritt der Software-Funktionsbaustein-Objekte (SFO1, ..., SFO4) bearbeitet,
- für den Fall einer interruptgesteuerten Bearbeitung des Steuerprogramms Änderungen von Signalzuständen an den Eingängen feststellt und die diesen Eingängen zugeordneten Software-Funktionsbaustein-Objekte (SF01, ..., SF04) bearbeitet,
- die Ausgänge des Prozeßabbildes aktualisiert.

2. Automatisierungsgerät oder intelligentes Feldgerät nach Anspruch 1, **dadurch gekennzeichnet**, daß das Exe-Engine-Objekt (ExE) sowie der Watchdog (Wd) als "threads" ausgebildet sind.

3. Automatisierungsgerät oder intelligentes Feldgerät nach Anspruch 1 oder 2, **dadurch gekennzeichnet**, daß die Kommunikationsschnittstelle eine TCP/IP-Protokoll-Kommunikation ermöglicht.

4. Automatisierungsgerät oder intelligentes Feldgerät nach einem der Ansprüche 1 bis 3, **dadurch gekennzeichnet**, daß die Software-Funktionsbausteine (SFO1, ..., SFO4) Java-bytecodiert sind und in der Programmiersprache "JAVA C" oder in einer Programmiersprache nach der Norm IEC 1131 erstellbar sind.

5. Programmiergerät zur Erstellung von Software-Funktionsbausteinen eines Steuerprogramms, das einem Automatisierungsgerät zuführbar ist, welches während eines Steuerbetriebs das Steuerprogramm zyklisch und/oder interruptgesteuert bearbeitet, wobei die Software-Funktionsbausteine ladbar und zur Laufzeit des Steuerprogramms in dieses einbindbar ausgebildet sind,
**dadurch gekennzeichnet**,
- daß das Programmiergerät die Software-Funktionsbausteine (SFO1, ..., SFO4) objektorientiert ausgebildet erstellt,
- daß durch das Programmiergerät die Software-Funktionsbausteine (SFO1, ..., SFO4) dem Automatisierungsgerät über ein globales Netzwerk und eine Netzwerk-Kommunikationsschnittstelle des Programmiergerätes übertragbar sind und/oder dem Programmiergerät über das globale Netzwerk und die Netzwerk-Kommunikationsschnittstelle die Software-Funktionsbausteine (SFO1, ..., SFO4) zuführbar sind,
- daß das Programmiergerät zur Simulation des Steuerprogramms ein Software-Funktionsbaustein-Ablaufsystem (PLC-Object-Engine-System; Bos, ExE, Wd, IO) aufweist, welches ein Exe-Engine-Objekt (ExE), einen Watchdog (Wd), einen Bootstrap (Bos) und ein Ein-/Ausgabe-Modul-Objekt (IO) umfaßt, in welchem ein Prozeßabbild von Ein- und Ausgängen hinterlegbar ist und welchem Signalzustände von Prozeßeingängen zuführbar sind und durch welches Signalzustände Prozeßausgängen zuführbar sind,
wobei
- der Bootstrap (Bos) vor Beginn des Steuerbetriebes die Software-Funktionsbaustein-Objekte (SFO1, ..., SFO4) und das Ein-/Ausgabe-Modul-Objekt (IO) erzeugt sowie dem Exe-Engine-Objekt (ExE) zuführt:
- für den Fall einer zyklischen Bearbeitung des Steuerprogramms eine Liste der zu bearbeitenden Software-Funktionsbaustein-Objekte (SFO1, ..., SFO4),
- für den Fall einer interruptgesteuerten Bearbeitung des Steuerprogramms eine Liste der zu bearbeitenden Software-Funktionsbaustein-Objekte (SFO1, ..., SFO4) für jeden Prozeßeingang,
und wobei
- der Bootstrap (Bos) zu Beginn des Steuerbetriebes das Exe-Engine-Objekt (ExE) startet, welches zunächst den Watchdog (Wd) startet, welcher beim Überschreiten der Zykluszeit das Exe-Engine-Objekt (ExE) zurücksetzt, und anschließend zyklisch
- die Eingänge des Prozeßabbildes aktualisiert,
- für den Fall einer zyklischen Bearbeitung des Steuerprogramms jeweils einen Bearbeitungsschritt der Software-Funktionsbaustein-Objekte (SFO1, ..., SFO4) bearbeitet,
- für den Fall einer interruptgesteuerten Bearbeitung des Steuerprogramms Änderungen von Signalzuständen an den Eingängen feststellt und die diesen Eingängen zugeordneten Software-Funktionsbaustein-Objekte (SFO1, ..., SFO4) bearbeitet,
- die Ausgänge des Prozeßabbildes aktualisiert.

6. Programmiergerät nach Anspruch 5, dadurch gekennzeichnet, daß die Kommunikationsschnittstelle eine TCP/IP-Protokoll-Kommunikation ermöglicht.

7. Programmiergerät nach Anspruch 5 oder 6, dadurch gekennzeichnet, daß die Software-Funktionsbausteine (SFO1, ..., SFO4) in der auf dem Programmiergerät ablauffähigen Programmiersprache "JAVA C" oder in einer Programmiersprache nach der Norm IEC 1131 erstellbar und durch das Programmiergerät Java-bytecodiert übersetzbar sind.

8. Automatisierungssystem
- mit mindestens einem Automatisierungsgerät oder intelligenten Feldgerät nach einem der Ansprüche 1 bis 4,
- mit mindestens einem Programmiergerät nach einem der Ansprüche 5 bis 7 und/oder
- mit mindestens einem Bedien- und Beobachtungsgerät, welches mit einem Bedien- und Beobachtungs-Softwarebausteine umfassenden Bedien- und Beobachtungsprogramm versehen ist.

9. Automatisierungsverbund
- mit einem Automatisierungssystem nach Anspruch 8 und
- mit mindestens einer Workstation und/oder einem Server, welche Mittel zum Erstellen und Bearbeiten von objektorientierten Software-Funktionsbausteinen (SFO1, ..., SFO4) aufweisen.

## Claims

1. Programmable controller or intelligent field device, to which there can be fed software function blocks of a control program which the device processes cyclically and/or in an interrupt-driven manner during a control operation, wherein the software function blocks are formed in such a way that they can be loaded and can be linked into the control program for the running time thereof, characterised
- in that the software function blocks (SFO1, ..., SFO4) are formed in an object-orientated manner and can be loaded by way of a global network and a network communication interface of the device into the latter, and
- in that the device has a software function block execution system (PLC-object-engine-system; Bos, ExE, Wd, IO), which comprises an exe-engine-object (ExE), a watchdog (Wd), a bootstrap (Bos) and an input/output module object (IO) in which a process image of inputs and outputs can be stored and to which signal states of process inputs can be fed and by means of which signal states can be fed to process outputs,
wherein
- before the beginning of the control operation the bootstrap (Bos) generates the software function block objects (SFO1, SFO4) and the input/output module object (IO) and also feeds to the exe-engine-object (ExE):
- for the case of cyclical processing of the control program a list of the software function block objects (SFO1, ..., SFO4) to be processed,
- for the case of interrupt-driven processing of the control program a list of the software function block objects (SFO1, ..., SFO4) to be processed for each process input,
and wherein
- at the beginning of the control operation the bootstrap (Bos) starts the exe-engine-object (ExE) which in the first instance starts the watchdog (Wd), which when the cycle time is exceeded resets the exe-engine-object (ExE), and subsequently cyclically
- updates the inputs of the process image,
- for the case of cyclical processing of the control program processes a respective processing step of the software function block objects (SFO1, ..., SFO4),
- for the case of interrupt-driven processing of the control program ascertains changes in signal states at the inputs and processes the software function block objects (SFO1, ..., SFO4) associated with these inputs,
- updates the outputs of the process image.

2. Programmable controller or intelligent field device according to claim 1, characterised in that the exe-engine-object (ExE) and also the watchdog (Wd) are formed as "threads".

3. Programmable controller or intelligent field device according to claim 1 or 2, characterised in that the communication interface renders possible a TCP/IP protocol communication.

4. Programmable controller or intelligent field device according to one of claims 1 to 3, characterised in that the software function blocks (SFO1, ..., SFO4) are Java byte-coded and can be created in the programming language "JAVA C" or in a programming language in accordance with the IEC 1131 standard.

5. Programming device for creating software function blocks of a control program which can be fed to a programmable controller which processes the control program cyclically and/or in an interrupt-driven manner during a control operation, wherein the software function blocks are formed in such a way that they can be loaded and can be linked into the control program for the running time thereof, characterised
- in that the programming device creates the software function blocks (SFO1, ..., SFO4) in such a way that they are formed in an object-orientated manner,
- in that by means of the programming device the software function blocks (SFO1, ..., SFO4) can be transmitted to the programmable controller by way of a global network and a network communication interface of the programming device and/or the software function blocks (SFO1, ..., SFO4) can be fed to the programming device by way of the global network and the network communication interface,
- and in that the programming device for the purpose of simulating the control program has a software function block execution system (PLC-object-engine-system; Bos, ExE, Wd, IO), which comprises an exe-engine-object (ExE), a watchdog (Wd), a bootstrap (Bos) and an input/output module object (IO) in which a process image of inputs and outputs can be stored and to which signal states of process inputs can be fed and by means of which signal states can be fed to process outputs,
wherein
- before the beginning of the control operation the bootstrap (Bos) generates the software function block objects (SFO1, ..., SFO4) and the input/output module object (IO) and also feeds to the exe-engine-object (ExE):
- for the case of cyclical processing of the control program a list of the software function block objects (SFO1, ..., SFO4) to be processed,
- for the case of interrupt-driven processing of the control program a list of the software function block objects (SFO1, ..., SFO4) to be processed for each process input,
and wherein
- at the beginning of the control operation the bootstrap (Bos) starts the exe-engine-object (ExE) which in the first instance starts the watchdog (Wd), which when the cycle time is exceeded resets the exe-engine-object (ExE), and subsequently cyclically
- updates the inputs of the process image,
- for the case of cyclical processing of the control program processes a respective processing step of the software function block objects (SFO1, ..., SFO4),
- for the case of interrupt-driven processing of the control program ascertains changes in signal states at the inputs and processes the software function block objects (SFO1, ..., SFO4) associated with these inputs,
- updates the outputs of the process image.

6. Programming device according to claim 5, characterised in that the communication interface renders possible a TCP/IP protocol communication.

7. Programming device according to claim 5 or 6, characterised in that the software function blocks (SF01, ..., SF04) can be created in the programming language "JAVA C" that can be executed on the programming device or in a programming language in accordance with the IEC 1131 standard and can be translated by means of the programming device in a Java byte-coded manner.

8. Automation system
- having at least one programmable controller or intelligent field device according to one of claims 1 to 4,
- having at least one programming device according to one of claims 5 to 7, and/or
- having at least one operating and monitoring device which is provided with an operating and monitoring program comprising operating and monitoring software blocks.

9. Integrated automation system
- having an automation system according to claim 8, and
- having at least one work station and/or one server which have/has means for creating and processing object-orientated software function blocks (SFO1, ..., SFO4).

## Revendications

1. Appareil d'automatisation ou outil intelligent, auquel peuvent être envoyés des modules fonctionnels logiciels d'un programme de commande que l'appareil traite pendant un fonctionnement de commande de façon cyclique et/ou commandée par interruptions, les modules fonctionnels logiciels étant conçus de manière à pouvoir être chargés et à pouvoir être intégrés dans le programme de commande pendant le temps d'exécution de celui-ci,
caractérisé par le fait que
- les modules fonctionnels logiciels (SFO1 à SFO4) sont conçus selon une orientation objets et peuvent être chargés dans l'appareil par l'intermédiaire d'un réseau global et d'une interface de communication de réseau de cet appareil, et
- l'appareil comporte une commande séquentielle de modules fonctionnels logiciels (PLC-Object-Engine-System; Bos, ExE, Wd, IO) qui comprend un objet engine Exe (ExE), un watchdog (Wd), un bootstrap (Bos) et un objet module d'entrée/sortie (IO), dans lequel une image de processus d'entrées et de sorties peut être mémorisée, auquel des états de signaux d'entrées de processus peuvent être envoyés et par lequel des états de signaux peuvent être envoyés à des sorties de processus,
- le bootstrap (Bos) produisant avant le début du fonctionnement de commande les objets modules fonctionnels logiciels (SFO1 à SFO4) et l'objet module d'entrée/sortie (IO) et envoyant à l'objet engine Exe (ExE):
- dans le cas d'un traitement cyclique du programme de commande, une liste des objets modules fonctionnels logiciels (SFO1 à SFO4) à traiter,
- dans le cas d'un traitement commandé par interruptions du programme de commande, une liste des objets modules fonctionnels logiciels (SFO1 à SFO4) à traiter pour chaque entrée de processus,
- le bootstrap (Bos) démarrant au début du fonctionnement de commande l'objet engine (ExE) qui démarre d'abord le watchdog (Wd), lequel remet à l'état initial l'objet engine Exe (ExE) en cas de dépassement du temps de cycle, et qui effectue ensuite cycliquement les opérations suivantes :
- il actualise les entrées de l'image de processus,
- dans le cas d'un traitement cyclique du programme de commande, il traite à chaque fois une étape de traitement des objets modules fonctionnels logiciels (SFO1 à SFO4),
- dans le cas d'un traitement commandé par interruptions du programme de commande, il détecte des modifications d'états de signaux aux entrées et il traite les objets modules fonctionnels logiciels (SFO1 à SFO4) associés à ces entrées,
- il actualise les sorties de l'image de processus.

2. Appareil d'automatisation ou outil intelligent selon la revendication 1, caractérisé par le fait que l'objet engine Exe (ExE) ainsi que le watchdog (Wd) sont conçus comme des "threads".

3. Appareil d'automatisation ou outil intelligent selon la revendication 1 ou 2, caractérisé par le fait que l'interface de communication permet une communication selon le protocole TCP/IP.

4. Appareil d'automatisation ou outil intelligent selon l'une des revendications 1 à 3, caractérisé par le fait que les modules fonctionnels logiciels (SFO1 à SFO4) sont en code octets Java et peuvent être écrits dans le langage de programmation "JAVA C" ou dans un langage de programmation selon la norme IEC 1131.

5. Appareil de programmation pour l'élaboration de modules fonctionnels logiciels d'un programme de commande qui peut être envoyé à un appareil d'automatisation qui traite pendant le fonctionnement de commande le programme de commande de façon cyclique et/ou commandée par interruptions, les modules fonctionnels logiciels étant conçus de manière à pouvoir être chargés et à pouvoir être intégrés dans le programme de commande pendant le temps d'exécution de celui-ci,
caractérisé par le fait que
- l'appareil de programmation élabore les modules fonctionnels logiciels (SFO1 à SFO4) selon une conception orientée objets,
- les modules fonctionnels logiciels (SFO1 à SFO4) peuvent être transmis par l'appareil de programmation à l'appareil d'automatisation par l'intermédiaire d'un réseau global et d'une interface de communication de réseau de l'appareil de programmation et/ou les modules fonctionnels logiciels (SFO1 à SFO4) peuvent être envoyés à l'appareil de programmation par l'intermédiaire d'un réseau global et d'une interface de communication de réseau,
- l'appareil de programmation comporte pour la simulation du programme de commande une commande séquentielle de modules fonctionnels logiciels (PLC-Object-Engine-System; Bos, ExE, Wd, IO) qui comprend un objet engine Exe (ExE), un watchdog (Wd), un bootstrap (Bos) et un objet module d'entrée/sortie (IO) dans lequel une image de processus d'entrées et de sorties peut être mémorisée, auquel des états de signaux d'entrées de processus peuvent être envoyés et par lequel des états de signaux peuvent être envoyés à des sorties de processus,
- le bootstrap (Bos) produisant avant le début du fonctionnement de commande les objets modules fonctionnels logiciels (SFO1 à SFO4) et l'objet module d'entrée/sortie (IO) et envoyant à l'objet engine Exe (ExE):
- dans le cas d'un traitement cyclique du programme de commande, une liste des objets modules fonctionnels logiciels (SFO1 à SFO4) à traiter,
- dans le cas d'un traitement commandé par interruptions du programme de commande, une liste des objets modules fonctionnels logiciels (SFO1 à SFO4) à traiter pour chaque entrée de processus,
- le bootstrap (Bos) démarrant au début du fonctionnement de commande l'objet engine Exe (ExE) qui démarre d'abord le watchdog (Wd), lequel remet à l'état initial l'objet engine Exe (ExE) en cas de dépassement du temps de cycle, et qui effectue ensuite cycliquement les opérations suivantes :
- il actualise les entrées de l'image de processus,
- dans le cas d'un traitement cyclique du programme de commande, il traite à chaque fois une étape de traitement des objets modules fonctionnels logiciels (SFO1 à SFO4),
- dans le cas d'un traitement commandé par interruptions du programme de commande, il détecte des modifications d'états de signaux aux entrées et il traite les objets modules fonctionnels logiciels (SFO1 à SFO4) associés à ces entrées,
- il actualise les sorties de l'image de processus.

6. Appareil de programmation selon la revendication 5, caractérisé par le fait que l'interface de communication permet une communication selon le protocole TCP/IP.

7. Appareil de programmation selon la revendication 5 ou 6, caractérisé par le fait que les modules fonctionnels logiciels (SFO1 à SFO4) peuvent être écrits dans le langage de programmation "JAVA C" exécutable sur l'appareil de programmation ou dans un langage de programmation selon la norme IEC 1131 et peuvent être traduits par l'appareil de programmation dans un code octets Java.

8. Système d'automatisation comportant
- au moins un appareil d'automatisation ou outil intelligent selon l'une des revendications 1 à 4,
- au moins un appareil de programmation selon l'une des revendications 5 à 7 et/ou
- au moins un appareil de contrôle et d'observation qui est muni d'un programme de contrôle et d'observation comprenant des modules de contrôle et d'observation.

9. Complexe d'automatisation comportant
- un système d'automatisation selon la revendication 8 et
- au moins une station de travail et/ou un serveur qui comportent des moyens pour l'élaboration et le traitement de modules fonctionnels logiciels (SFO1 à SFO4) orientés objets.
